(19) Europäisches Patentamt
European Patent Office
Office européen des brevets

(11) Veröffentlichungsnummer: **0 226 003 B1**

# (12) EUROPÄISCHE PATENTSCHRIFT

(45) Veröffentlichungstag der Patentschrift: **19.12.90**

(51) Int. Cl.[5]: **C08F 10/06**, C08F 4/64

(21) Anmeldenummer: **86114927.6**

(22) Anmeldetag: **27.10.86**

## (54) Verfahren zum Herstellen von Homo- und Copolymerisaten des Propylens mittels eines Ziegler-Natta-Katalysatorsystems.

(30) Priorität: **16.11.85 DE 3540699**

(43) Veröffentlichungstag der Anmeldung: **24.06.87 Patentblatt 87/26**

(45) Bekanntmachung des Hinweises auf die Patenterteilung: **19.12.90 Patentblatt 90/51**

(84) Benannte Vertragsstaaten: **AT BE DE ES FR GB IT NL**

(56) Entgegenhaltungen: **FR-A- 2 516 520**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen(DE)**

(72) Erfinder: **Jaggard, James F. R., Dr., Bordollo-Ring 21, D-6718 Gruenstadt(DE)**
Erfinder: **Werner, Rainer Alexander, Dr., Berliner Str. 14, D-6702 Bad Dürkheim(DE)**
Erfinder: **Gruber, Wolfgang, Dr., Lorscher-Ring 2b, D-6710 Frankenthal(DE)**

EP 0 226 003 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren zum Herstellen von Homopolymerisaten des Propylens sowie Copolymerisaten des Propylens mit untergeordneten Mengen anderer $C_2$- bis $C_6$-alpha-Monoolefine durch Polymerisation, insbesondere durch Trockenphasenpolymerisation, des bzw. der Monomeren bei Temperaturen von 20 bis 160, vorzugsweise 50 bis 120, insbesondere 50 bis 90°C und Drücken von 1 bis 100, vorzugsweise 8 bis 70, insbesondere 10 bis 50 bar, mittels eines Ziegler-Natta-Katalysatorsystems aus

(1) einer Titankomponente, die Titan, Magnesium, Chlor sowie ein Benzolcarbonsäurederivat enthält,
(2) einer Aluminiumkomponente der Formel

$$X\,Al\,R^1_2,$$

worin stehen
X für $R^1$ oder Chlor und
$R^1$ für einen nicht mehr als 8, insbesondere nicht mehr als 4 Kohlenstoffatome aufweisenden Alkylrest,
(3) einer Silankomponente der Formel

$$R^2_n\,Si(OR^3)_{4-n},$$

worin stehen
$R^2$ für einen nicht mehr als 16, vorzugsweise nicht mehr als 10 Kohlenstoffatome aufweisenden Aryl- oder Alkylrest, insbesondere den Phenylrest,
$R^3$ für einen nicht mehr als 15, insbesondere nicht mehr als 7 Kohlenstoffatome aufweisenden Alkylrest,
n für eine Zahl von 0 bis 3, insbesondere von 0 bis 2,
mit der Maßgabe, daß das Atomverhältnis Titan aus der Titankomponente (1): Aluminium aus der Aluminiumkomponente (2) 1:10 bis 1:500, insbesondere 1:20 bis 1:200, sowie Aluminium aus der Aluminiumkomponente (2): Silicium aus der Silankomponente (3) 1:0,01 bis 1:0,5, insbesondere 1:0,03 bis 1:0,3 beträgt.

Polymerisationsverfahren dieser Art sind bekannt; ihre Besonderheit gegenüber vergleichbaren anderen Verfahren liegt in der speziellen Ausgestaltung des Katalysatorsystems, wobei als Prototypen für den vorliegenden Fall die aus den EP-PS 45977, EP-OS 144 O21 und GB-PS 21 43 834 bekannten Verfahren genannt werden können.

"Aus der FR-A 2 516 520 ist ein Verfahren zur Herstellung von Propylenpolymerisaten bekannt, in welchem ein Ziegler-Natta-Katalysatorsystem eingesetzt wird, das als feste Katalysatorkomponente neben einer Titan- und einer Magnesiumverbindung noch Elektronendonorverbindungen aufweist. Nach der Bildung der festen Katalysatorkomponente wird dieses mit einer flüssigen Titanverbindung oder mit einem flüssigen halogenierten Kohlenwasserstoff gewaschen."

Die speziellen Ausgestaltungen des Katalysatorsystems werden vorgenommen, um bestimmte Ziele zu erreichen, z.B. die folgenden:

(A) Katalysatorsysteme, die zu Polymerisaten mit einem hohen Anteil an stereoregulärem (= isotaktischem) Polymerisat führen.

(B) Katalysatorsysteme, die eine erhöhte Ausbeute an Polymerisat zu liefern vermögen, nämlich Systeme mit einer erhöhten Produktivität, d.h. Systeme, bei denen die Menge an gebildetem Polymerisat pro Gewichtseinheit des Katalysatorsystems erhöht ist.

(C) Katalysatorsysteme, durch die weniger Halogen in das Polymerisat eingebracht wird; - was zu erreichen ist, indem die Ausbeute gemäß (B) gesteigert wird.

(D) Katalysatorsysteme, deren Aktivitätsmaximum über eine möglichst lange Zeit konstant bzw. relativ konstant bleibt; - was nicht nur für die Katalysatorausbeuten von erheblicher Bedeutung ist, sondern auch von großer Wichtigkeit beim Herstellen von Homo- und Copolymerisaten, insbesondere von Blockcopolymerisaten, nach dem sog. "Kaskaden"-Verfahren.

(E) Katalysatorsysteme, durch welche die morphologischen Eigenschaften der Polymerisate in bestimmter Weise beeinflußt werden, etwa im Sinne einer einheitlichen Korngröße und/oder einer Verringerung der Feinstkornanteile und/oder eines hohen Schüttgewichtes; - was z.B. für die technische Beherrschung der Polymerisationssysteme, die Aufarbeitung der Polymerisate und/oder die Verarbeitbarkeit der Polymerisate von Bedeutung sein kann.

(F) Katalysatorsysteme, die es ermöglichen, bei der Polymerisation unter Einwirkung eines Molekulargewichtsreglers, wie insbesondere Wasserstoff, mit relativ geringen Mengen an Regler auszukommen; - was z.B. für die Thermodynamik der Verfahrensführung von Bedeutung sein kann.

(G) Katalysatorsysteme, die auf spezielle Polymerisationsverfahren zugeschnitten sind; - etwa solche, die z.B. entweder auf die spezifischen Besonderheiten der Suspensionspolymerisation oder auf die spezifischen Besonderheiten der Trockenphasenpolymerisation abgestimmt sind.

(H) Katalysatorsysteme, die zu Polymerisaten führen, deren Eigenschaftsspektrum sie für das eine oder das andere Anwendungsgebiet besonders geeignet macht.

(I) Katalysatorsysteme, deren Titankomponenten (1) besonders leicht herzustellen sind.

(K) Katalysatorsysteme, die es ermöglichen, besonders geruchsarme Polymerisate herzustellen.

Nach den bisherigen Erfahrungen gibt es unter den mannigfachen Zielen etliche Ziele, die man durch spezielle Ausgestaltungen des Katalysatorsystems nur dann erreichen kann, wenn man andere Ziele zurücksetzt.

Unter diesen Gegebenheiten ist man im allgemeinen bestrebt, solche Ausgestaltungen zu finden, mit denen man nicht nur die gesteckten Ziele erreicht, sondern auch andere erwünschte Ziele möglichst wenig zurücksetzen muß.

In diesem Rahmen liegt auch die Aufgabenstellung der vorliegenden Erfindung: Eine neue Ausgestaltung eines Katalysatorsystems aufzuzeigen, mit

der man gegenüber bekannten Ausgestaltungen - unter vergleichbarer Zielsetzung - bessere Ergebnisse erreichen kann, namentlich bessere Ergebnisse hinsichtlich der oben unter (A), (C), (G) und (I) aufgeführten Ziele bei zugleich möglichst geringer Zurücksetzung der unter (D), (E), und (H) genannten Ziele.

Es wurde gefunden, daß die gestellte Aufgabe gelöst werden kann mit einem Katalysatorsystem der eingangs definierten Art, das als Titankomponente (1) eine in drei Stufen in besonderer Weise aus speziellen Einsatzstoffen hergestellte enthält.

Gegenstand der vorliegenden Erfindung ist dementsprechend ein Verfahren zum Herstellen von Homopolymerisaten des Propylens sowie Copolymerisaten des Propylens mit untergeordneten Mengen anderer $C_2$- bis $C_6$-alpha-Monoolefine durch Polymerisation, insbesondere durch Trockenphasenpolymerisation, des bzw. der Monomeren bei Temperaturen von 20 bis 160, vorzugsweise 50 bis 120, insbesondere 50 bis 90°C und Drücken von 1 bis 100, vorzugsweise 8 bis 70, insbesondere 10 bis 50 bar, mittels eines Ziegler-Natta-Katalysatorsystems aus

(1) einer Titankomponente, die Titan, Magnesium, Chlor sowie ein Benzolcarbonsäurederivat enthält,

(2) einer Aluminiumkomponente der Formel

$$X\,Al\,R^1_2,$$

worin stehen

X für $R^1$ oder Chlor und

$R^1$ für einen nicht mehr als 8, insbesondere nicht mehr als 4 Kohlenstoffatome aufweisenden Alkylrest,

(3) einer Silankomponente der Formel

$$R^2_n\,Si(OR^3)_{4-n},$$

worin stehen,

$R^2$ für einen nicht mehr als 16, vorzugsweise nicht mehr als 10 Kohlenstoffatome aufweisenden Aryl- oder Alkylrest, insbesondere den Phenylrest,

$R^3$ für einen nicht mehr als 15, insbesondere nicht mehr als 7 Kohlenstoffatome aufweisenden Alkylrest,

n für eine Zahl von 0 bis 3, insbesondere von 0 bis 2,

mit der Maßgabe, daß das Atomverhältnis Titan aus der Titankomponente (1): Aluminium aus der Aluminiumkomponente (2) 1:10 bis 1:500, insbesondere 1:20 bis 1:200, sowie Aluminium aus der Aluminiumkomponente (2): Silicium aus der Silankomponente (3) 1:0,01 bis 1:0,5, insbesondere 1:0,03 bis 1:0,3 beträgt.

Das erfindungsgemäße Verfahren ist dadurch gekennzeichnet, daß man als Titankomponente (1) eine solche einsetzt, die erhalten wird, indem man zunächst

(1.1) in einer ersten Stufe

(1.1.1) in einem flüssigen alkanischen oder aromatischen Kohlenwasserstoff, insbesondere in einem flüssigen alkanischen Kohlenwasserstoff,

(1.1.2) eine feinteilige, einen Teilchendurchmesser im Bereich von 0,01 bis 5, vorzugsweise 0,01 bis 2, insbesondere 0,05 bis 0,3 mm aufweisende Magnesiumverbindung der Formel

$$MgX_2,$$

worin steht

X für ein Halogen, insbesondere Chlor,

(1.1.3) einen Alkohol der Formel

$$R^4OH,$$

worin steht

$R^4$ für einen $C_1$- bis $C_8$-, vorzugsweise $C_2$- bis $C_6$- und insbesondere $C_2$-Alkylrest,

(1.1.4) einen Phthalsäureabkömmling der Formel

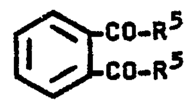

worin steht

$R^5$ für einen $C_1$- bis $C_{18}$-, vorzugsweise $C_2$- bis $C_{12}$-, insbesondere $C_2$- bis $C_8$-Alkoxirest,

(1.1.5) Titantetrachlorid

derart miteinander umsetzt, daß man

(1.1.A) zunächst unter ständiger Durchmischung bei einer Temperatur im Bereich von -20 bis +40, insbesondere +10 bis +30°C die Magnesiumverbindung und den Alkohol zusammenbringt - wobei mengenmäßig eingesetzt werden auf 100 Molteile des Kohlenwasserstoffs 5 bis 30, vorzugsweise 10 bis 20 und insbesondere 13 bis 18 Molteile der Magnesiumverbindung und auf 100 Molteile der Magnesiumverbindung 100 bis 600, insbesondere 200 bis 400 und ganz besonders 200 bis 350 Molteile des Alkohols -, das Durchmischen während 0,2 bis 12, insbesondere 0,5 bis 4 Stunden fortsetzt und die Temperatur im Bereich von -20 bis +150, insbesondere +50 bis +130°C hält,

(1.1.B) anschließend unter ständiger Durchmischung das Titantetrachlorid bei einer Temperatur im Bereich von -20 bis +40, insbesondere +10 bis +30°C zugibt - wobei mengenmäßig eingesetzt werden auf 100 Molteile Alkohol 50 bis 500, vorzugsweise 80 bis 300, insbesondere 90 bis 250 Molteile Titantetrachlorid - und unter ständiger Durchmischung das resultierende Gemisch 0,1 bis 4, insbesondere 0,2 bis 2,5 Stunden auf einer Temperatur von 10 bis 150, insbesondere 60 bis 120°C hält (wobei einer kürzeren Zeit eine höhere Temperatur zuzuordnen ist et vice versa), mit der Maßgabe, daß während der Verfahrensvorgänge (1.1.A) und/oder (1.1.B) der Phthalsäureabkömmling zugesetzt wird - wobei mengenmäßig eingesetzt werden auf 100 Molteile der Magnesiumverbindung 1 bis 50, vorzugsweise 5 bis 30 und insbesondere 10 bis 25 Molteile des Phthalsäureabkömmlings - und das hieraus resultierende feste Zwischenprodukt unter Abtrennung der verbleibenden flüssigen Phase isoliert, hierauf

(1.2) in einer zweiten Stufe das aus Stufe (1.1) erhaltene feste Zwischenprodukt - das zu A Gewichtsprozent aus Magnesium besteht - bei einer Temperatur im Bereich von 100 bis 150, insbesondere 115 bis 135°C solange mit Titantetrachlorid semikontinuierlich oder kontinuierlich, insbesondere kontinuierlich extrahiert, bis der verbleibende feste Stoff um den Faktor 1,1 bis 2,4, insbesondere 1,4 bis 2,0 reicher an Magnesium geworden ist - d.h. zu 1,1 . A bis 2,4 . A, insbesondere 1,4 . A bis 2,0 . A Gewichtsprozent aus Magnesium besteht - und schließlich

(1.3) in einer dritten Stufe den in Stufe (1.2) verbliebenen mit dem Extraktionsmittel befeuchteten festen Stoff mit einem flüssigen $C_5$- bis $C_8$-Alkan, 1 bis 10, insbesondere 3 bis 5 mal wäscht - wobei eingesetzt werden auf 100 Gewichtsteile fester Stoff pro Waschschritt 300 bis 400 Volumenteile Alkan - und derart mit dem aus Stufe (1.3) anfallenden festen Stoff die Titankomponente (1) gewinnt.

Zu dem erfindungsgemäßen Verfahren ist im einzelnen das folgende zu bemerken:

Das Polymerisationsverfahren als solches kann - unter Beachtung der kennzeichnenden Besonderheit - in praktisch allen einschlägig üblichen technologischen Ausgestaltungen durchgeführt werden, etwa als diskontinuierliches, taktweises oder kontinuierliches Verfahren, sei es z.B. als Suspensionspolymerisationsverfahren oder insbesondere Trokkenphasenpolymerisationsverfahren. Die erwähnten technologischen Ausgestaltungen - mit anderen Worten: die technologischen Varianten der Polymerisation von alpha-Monoolefinen nach Ziegler-Natta - sind aus der Literatur und Praxis wohlbekannt, so daß sich nähere Ausführungen zu ihnen erübrigen.

Der Vollständigkeit halber ist zu erwähnen, daß sich beim erfindungsgemäßen Verfahren auch die Molekulargewichte der Polymerisate durch die einschlägig üblichen Maßnahmen regeln lassen, z.B. mittels Reglern, wie insbesondere Wasserstoff.

Des weiteren ist noch festzuhalten, daß beim erfindungsgemäßen Verfahren die Komponenten des Katalysatorsystems in mannigfacher Weise in den Polymerisationsraum eingebracht werden können, z.B. (i) die Titankomponente (1) als eine Komponente, die Aluminiumkomponente (2) sowie die Silankomponente (3) als zwei weitere Komponenten alle örtlich gemeinsam, (ii) die gleichen drei Komponenten alle örtlich getrennt voneinander, (iii) die Titankomponente (1) einerseits und ein Gemisch aus (2) und (3) andererseits örtlich getrennt voneinander - was insbesondere beim Trockenphasenpolymerisationsverfahren von Vorteil sein kann - oder (iiii) ein Gemisch aus der Titankomponente (1) und der Silankomponente (3) einerseits und die Aluminiumkomponente (2) andererseits örtlich getrennt voneinander.

Was die stoffliche Seite des neuen Katalysatorsystems betrifft, ist im einzelnen das folgende zu sagen:

(1) Der zur Herstellung der Titankomponente eingesetzte flüssige Kohlenwasserstoff (1.1.1) kann ein Kohlenwasserstoff der Art sein, die üblicherweise mit Titankomponenten für Katalysatorsysteme des Ziegler-Natta-Typs ohne Schaden für das Katalysatorsystem bzw. dessen Titankomponente zusammengebracht wird. Als Beispiele für geeignete Kohlenwasserstoffe seien genannt: Pentane, Hexane, Heptane, Benzine und Cyclohexan.

Die gleichfalls eingesetzte Magnesiumverbindung (1.1.2) kann eine übliche, der angegebenen Formel gehorchende sein. Sie sollte im wesentlichen wasserfrei sein, d.h. ihr Gehalt an Wasser sollte 1 Gewichtsprozent der Gesamtmenge an Magnesiumchlorid nicht überschreiten.

Der zur Herstellung der Titankomponente (1) eingesetzte Alkohol (1.1.3) - hier eignet sich vor allem Ethanol - sowie der ebenfalls einzusetzende Phthalsäureabkömmling (1.1.4) können handelsübliche sein; sie sollten vorteilhafterweise relativ hohe Reinheitsgrade aufweisen.

Das zur Herstellung der Titankomponente (1) einzusetzende Titantetrachlorid sollte ein bei Ziegler-Natta-Katalysatorsystemen übliches sein.

Das zur Herstellung der Titankomponente (1) in Stufe (1.3) einzusetzende Alkan kann ebenfalls ein übliches sein; es sollte vorteilhafterweise einen relativ hohen Reinheitsgrad aufweisen.

Die Herstellung der Titankomponente (1) ist einfach und für den Fachmann ohne Erläuterungen möglich. Zu den Stufen (1.1), (1.2) und (1.3) ist lediglich zu erwähnen, daß die Isolierung des jeweils resultierenden Feststoffs zweckmäßigerweise durch Filtration erfolgt.

(2) Als Aluminiumkomponenten (2) mit der angegebenen Formel kommen die einschlägig üblichen, dieser Formel gehorchenden in Betracht; sie sind aus Literatur und Praxis so wohlbekannt, daß auf sie nicht näher eingegangen zu werden braucht. Als herausragender Vertreter sei beispielsweise genannt Triethylaluminium.

(3) Die das Katalysatorsystem vervollständigende Silankomponente (3) ist insbesondere ein Tetra-, Tri- oder Dialkoxisilan der angegebenen Formel. Als herausragende Vertreter seien beispielsweise genannt Triethoxiphenylsilan, Dimethoxidiphenylsilan.

Das erfindungsgemäße Verfahren erlaubt es, Homo- und Copolymerisate, z.B. des binären oder ternären Typs, - auch Blockcopolymerisate - des Propens mit untergeordneten Mengen anderer $C_2$- bis $C_6$-alpha-Monoolefine in vorteilhafter Weise herzustellen, wobei besonders geeignete zu polymerisierende alpha-Monoolefine als Comonomere Ethen, Buten-1 und Hexen-1 sind.

<u>Beispiel</u>

Herstellen der Titankomponente (1)

Es wird so verfahren, daß man zunächst

(1.1) in einer ersten Stufe
(1.1.1) in Heptan
(1.1.2) ein, einen Teilchendurchmesser von 0,08 bis 0,2 mm aufweisendes Magnesiumchlorid,
(1.1.3) Ethanol,
(1.1.4) Phthalsäuredi-n-butylester und
(1.1.5) Titantetrachlorid
- wobei mengenmäßig eingesetzt werden auf 100

Molteile Heptan 15 Molteile Magnesiumchlorid, auf 1OO Molteile Magnesiumchlorid 25O Molteile Ethanol und 2O Molteile Phthalsäuredi-n-butylester sowie auf 1OO Molteile Ethanol 2OO Molteile Titantetrachlorid - derart miteinander umsetzt, daß man zunächst

(1.1.A) unter ständiger Durchmischung mittels kräftigem Rühren zunächst bei 2O°C die Magnesiumverbindung, den Alkohol und den Phthalsäureabkömmling zusammenbringt, den Mischvorgang während 2 Stunden fortsetzt und die Temperatur bei 95°C hält, anschließend

(1.1.B) unter ständiger Durchmischung mittels kräftigem Rühren das Titantetrachlorid bei 2O°C zugibt, das Gemisch auf 95°C aufwärmt, 1 Stunde bei dieser Temperatur hält und das dabei resultierende feste Zwischenprodukt unter Abtrennung der verbleibenden flüssigen Phase durch Absaugen auf einer Glasfritte isoliert (ein kleiner Teil des festen Zwischenproduktes wurde mit Heptan gewaschen und getrocknet, es besaß einen Magnesiumgehalt von 11,4 Gew.%), hierauf

(1.2) in einer zweiten Stufe Titantetrachlorid aus einem Vorratsgefäß auf das in der Glasfritte befindliche Zwischenprodukt aus (1.1) destilliert, so daß sich unter Rühren eine Suspension aus Extraktionsmittel und festem Zwischenprodukt bildet, deren Temperatur bei 125°C gehalten wird, die Menge an weiterhin kontinuierlich aufdestilliertem Extraktionsmittel durch die Glasfritte in das Vorratsgefäß ablaufen läßt, diesen Vorgang solange fortsetzt, bis der Magnesiumgehalt des festen Stoffes 19,8 Gew.% beträgt, anschließend durch Filtration die flüssige Phase vom Feststoff abtrennt und schließlich

(1.3) in einer dritten Stufe die im Feststoff verbliebene flüssige Phase durch 4-maliges Waschen mit n-Heptan - wobei mengenmäßig eingesetzt werden auf 1OO Gewichtsteile Feststoff pro Waschschritt 35O Volumenteile n-Heptan - entfernt und nach Trocknen die Titankomponente (1) isoliert.

Polymerisation

Ein Stahlautoklav von 1O l-Volumen, ausgerüstet mit einem Rührer, wird mit 5O g Polypropylenpulver, 1O mMol Aluminiumtriethyl als Aluminiumkomponente (2), 1 mMol Triethoxiphenylsilan als Silankomponente (3), 5 Normalliter Wasserstoff und O,O5 mMol, gerechnet als Titan, der oben beschriebenen Titankomponente (1) bei 3O°C beschickt. Die Reaktortemperatur wird binnen 1O Minuten auf 7O°C, der Reaktordruck mittels Aufpressen von gasförmigem Propylen in dieser Zeit auf 27 bar angehoben.

Die eigentliche Polymerisation wird unter ständigem Rühren bei 7O°C und 27 bar während 2 Stunden durchgeführt, hierbei verbrauchtes Monomer wird kontinuierlich durch frisches ersetzt. Man erhält 21OO g Polymerisat, entsprechend einer Ergiebigkeit von 223OO g Polypropylen pro g Titankomponente (1), das Polymerisat weist 2,4 % in siedendem Heptan lösliche Anteile (als Maß für die Stereoregularität) auf und besitzt sehr hohe Schüttdichte.

**Patentansprüche**

1. Verfahren zum Herstellen von Homopolymerisaten des Propylens sowie Copolymerisaten des Propylens mit untergeordneten Mengen anderer $C_2$- bis $C_6$-alpha-Monoolefine durch Polymerisation des bzw. der Monomeren bei Temperaturen von 20 bis 160°C und Drücken von 1 bis 100 bar mittels eines Ziegler-Natta-Katalysatorsystems aus

(1) einer Titankomponente, die Titan, Magnesium, Chlor sowie ein Benzolcarbonsäurederivat enthält,

(2) einer Aluminiumkomponente der Formel

$$X\,Al\,R^1_2,$$

worin stehen

X für R1 oder Chlor und

$R^1$ für einen nicht mehr als 8 Kohlenstoffatome aufweisenden Alkylrest,

(3) einer Silankomponente der Formel

$$R^2_n\,Si(OR^3)_{4-n},$$

worin stehen

$R^2$ für einen nicht mehr als 16 Kohlenstoffatome aufweisenden Aryl- oder Alkylrest,

$R^3$ für einen nicht mehr als 15 Kohlenstoffatome aufweisenden Alkylrest,

n für eine Zahl von 0 bis 3,

mit der Maßgabe, daß das Atomverhältnis Titan aus der Titankomponente (1): Aluminium aus der Aluminiumkomponente (2) 1:10 bis 1:500, sowie Aluminium aus der Aluminiumkomponente (2): Silicium aus der Silankomponente (3) 1:0,01 bis 1:0,5 beträgt, dadurch gekennzeichnet, daß man als Titankomponente (1) eine solche einsetzt, die erhalten wird, indem man zunächst

(1.1) in einer ersten Stufe

(1.1.1) in einem flüssigen alkanischen oder aromatischen Kohlenwasserstoff,

(1.1.2) eine feinteilige, einen Teilchendurchmesser im Bereich von O,O1 bis 5 mm aufweisende Magnesiumverbindung der Formel

$$MgX_2\,,$$

worin steht

X für ein Halogen,

(1.1.3) einen Alkohol der Formel

$$R^4OH\,,$$

worin steht

$R^4$ für einen $C_1$- bis $C_8$-Alkylrest,

(1.1.4) einen Phthalsäureabkömmling der Formel

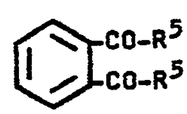

worin steht

$R^5$ für einen $C_1$- bis $C_{18}$-Alkoxirest,

(1.1.5) Titantetrachlorid
derart miteinander umsetzt, daß man
(1.1.A) zunächst unter ständiger Durchmischung bei einer Temperatur im Bereich von -20 bis +40°C die Magnesiumverbindung und den Alkohol zusammenbringt - wobei mengenmäßig eingesetzt werden auf 100 Molteile des Kohlenwasserstoffs 5 bis 30 Molteile der Magnesiumverbindung und auf 100 Molteile der Magnesiumverbindung 100 bis 600 Molteile des Alkohols -, das Durchmischen während 0,2 bis 12 Stunden fortsetzt und die Temperatur im Bereich von -20 bis +150°C hält,
(1.1.B) anschließend unter ständiger Durchmischung das Titantetrachlorid bei einer Temperatur im Bereich von -20 bis +40°C zugibt - wobei mengenmäßig eingesetzt werden auf 100 Molteile Alkohol 50 bis 500 Molteile Titantetrachlorid - und unter ständiger Durchmischung das resultierende Gemisch 0,1 bis 4 Stunden auf einer Temperatur von 10 bis 150°C hält, mit der Maßgabe, daß während der Verfahrensvorgänge (1.1.A) und/oder (1.1.B) der Phthalsäureabkömmling zugesetzt wird - wobei mengenmäßig eingesetzt werden auf 100 Molteile der Magnesiumverbindung 1 bis 50 Molteile des Phthalsäureabkömmlings - und das hieraus resultierende feste Zwischenprodukt unter Abtrennung der verbleibenden flüssigen Phase isoliert, hierauf
(1.2) in einer zweiten Stufe das aus Stufe (1.1) erhaltene feste Zwischenprodukt - das zu A Gewichtsprozent aus Magnesium besteht - bei einer Temperatur im Bereich von 100 bis 150°C solange mit Titantetrachlorid semikontinuierlich oder kontinuierlich extrahiert, bis der verbleibende feste Stoffe um den Faktor 1,1 bis 2,4 reicher an Magnesium geworden ist - d.h. zu 1,1 . A bis 2,4 . A Gewichtsprozent aus Magnesium besteht - und schließlich
(1.3) in einer dritten Stufe den in Stufe (1.2) verbliebenen mit dem Extraktionsmittel befeuchteten festen Stoff mit einem flüssigen $C_5$- bis $C_8$-Alkan, 1 bis 10 mal wäscht - wobei eingesetzt werden auf 100 Gewichtsteile fester Stoff pro Waschschritt 300 bis 400 Volumenteile Alkan - und derart mit dem aus Stufe (1.3) anfallenden festen Stoff die Titankomponente (1) gewinnt.

**Claims**

1. A process for preparing homopolymers of propylene and copolymers of propylene with minor amounts of other $C_2$–$C_6$-alpha-monoolefins by polymerizing the monomer or monomers at 20–160°C and 1–100 bar by means of a Ziegler-Natta catalyst system comprising
(1) a titanium component which contains titanium, magnesium, chlorine and a benzenecarboxylic acid derivative,
(2) an aluminum component of the formula

$$X\,Al\,R^1_2$$

where
X is $R^1$ or chlorine and
$R^1$ is alkyl of not more than 8 carbon atoms,
(3) a silance component of the formula

$$R^2_n\,Si(OR^3)_{4-n}$$

where
$R^2$ is aryl or alkyl of not more than 16 carbon atoms,
$R^3$ is alkyl of not more than 15 carbon atoms and
n is 0, 1, 2 or 3
with the proviso that the atomic ratio of titanium in titanium component (1): aluminum in aluminum component (2) is from 1:10 to 1:500 and of aluminum in aluminum component (2): silicon in silane component (3) is from 1:0.01 to 1:0.5, which comprises using a titanium component (1) obtained by first of all reacting
(1.1) in a first stage
(1.1.1) in a liquid alkane or aromatic hydrocarbon,
(1.1.2) a finely divided magnesium compound having a particle diameter within the range from 0.01 to 5 mm and the formula

$$MgX_2$$

where
X is halogen,
(1.1.3) an alcohol of the formula

$$R^4OH$$

where
$R^4$ is $C_1$–$C_8$-alkyl,
(1.1.4) a phthalic acid derivative of the formula

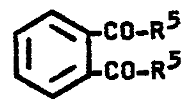

where
$R^5$ is $C_1$–$C_{18}$-alkoxy and
(1.1.5) titanium tetrachloride
with one another by
(1.1.A) first bringing together the magnesium compound and the alcohol with constant mixing at from –20 to +40°C using per 100 mole parts of the hydrocarbon from 5 to 30 mole parts of magnesium compound and per 100 mole parts of magnesium compound from 100 to 600 mole parts of the alcohol, the mixing being continued for from 0.2 to 12 hours and the temperature being maintained at from –20 to +150°C,
(1.1.B) subsequently adding the titanium tetrachloride with constant mixing at from –20 to +40°C using per 100 mole parts of alcohol from 50 to 500 mole parts of titanium tetrachloride, and with constant mixing maintaining the resulting mixture at 10–150°C for from 0.1 to 4 hours with the proviso that the phthalic acid derivative is added during process steps (1.1.A) and/or (1.1.B), in an amount, per 100 mole parts of magnesium compound, of from 1 to 50 mole part of the phthalic acid derivative, and isolating the resulting solid intermediate by separating off the remaining liquid phase, then

(1.2) in a second stage extracting the solid intermediate obtained from stage (1.1), which is A weight percent magnesium, at 100–150°C, semicontinuously or continuously, with titanium tetrachloride until the remaining solid substance has become richer in magnesium by a factor of from 1.1 to 2.4, ie. comprises from 1.1 • A to 2.4 • A weight percent magnesium, and finally
(1.3) washing in a third stage the extractant-moist solid substance remaining in stage (1.2) with a liquid $C_5$–$C_8$-alkane 1, 2, 3, 4, 5, 6, 7, 8, 9 or 10 times, using per 100 parts by weight of solid substance from 300 to 400 parts by volume of alkane per wash step, and in this way recovering with the solid substance produced in stage (1.3) said titanium component (1).

**Revendications**

1. Procédé de préparation d'homopolymères du propylène ainsi que de copolymères du propylène avec des quantités mineures d'autres α-monooléfines en $C_2$–$C_6$, par polymérisation du ou des monomères à des températures de 20 à 160°C et sous des pressions de 1 à 100 bars au moyen d'un système catalytique de Ziegler-Natta constitué par
(1) un composant à base de titane qui contient du titane, du magnésium, du chlore ainsi qu'un dérivé d'acide benzènecarboxylique,
(2) un composant à base d'aluminium de formule

$$X\,Al\,R^1_2$$

dans laquelle
X est mis pour $R^1$ ou pour un atome de chlore et
$R^1$ est mis pour un reste alkyle ne renfermant pas plus de 8 atomes de carbone,
(3) un composant à base de silane de formule

$$R^2_n\,Si(OR^3)_{4-n}$$

dans laquelle
$R^2$ est mis pour un reste aryle ou alkyle ne renfermant pas plus de 16 atomes de carbone,
$R^3$ pour un reste alkyle ne renfermant pas plus de 15 atomes de carbone,
n pour un nombre de 0 à 3
étant spécifié que le rapport atomique du titane dans le composant à base de titane (1) à l'aluminium dans le composant à base d'aluminium (2) se situe entre 1:10 et 1:500 et que le rapport atomique de l'aluminium dans le composant à base d'aluminium (2) au silicium dans le composant à base de silane (3) se situe entre 1:0,01 et 1:0,5, caractérisé en ce qu'on utilise, comme composant à base de titane (1), un composant qui est obtenu
(1.1) en faisant d'abord réagir entre eux, dans une première étape,
(1.1.1) dans un hydrocarbure alcanique ou aromatique liquide,
(1.1.2) un composé du magnésium finement divisé, présentant un diamètre de particules dans la gamme de 0,05 à 5 mm, de formule

$$MgX_2$$

dans laquelle
X est mis pour un atome d'halogène,
(1.1.3) un alcool de formule

$$R^4OH$$

dans laquelle
$R^4$ est mis pour un reste alkyle en $C_1$ à $C_8$,
(1.1.4) un dérivé d'acide phtalique de formule

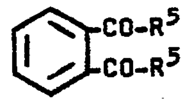

dans laquelle
$R^5$ est mis pour un reste alcoxy en $C_1$ à $C_{18}$,
(1.1.5) du tétrachlorure de titane, en procédant de la manière suivante:
(1.1.A) on commence par mettre en contact le composé du magnésium et l'alcool sous agitation continue à une température dans la gamme de –20 à +40°C – en utilisant, pour 100 parties en moles de l'hydrocarbure, de 5 à 30 parties en moles du composé du magnésium et, pour 100 parties en moles du composé du magnésium, de 100 à 600 parties en moles de l'alcool –, on poursuit le mélange pendant 0,2 à 12 h et on maintient la température dans la gamme de –20 à +150°C,
(1.1.B) on ajoute ensuite le tétrachlorure de titane sous mélange continu à une température dans la gamme de –20 à +40°C – en utilisant, pour 100 parties en moles d'alcool, de 50 à 500 parties en moles de tétrachlorure de titane – et, sous mélange continu, on maintient le mélange résultant pendant 0,1 à 4 h à une température de 10 à 150°C, étant spécifié que le dérivé d'acide phtalique est ajouté pendant les étapes (1.1.A) et/ou (1.1.B) du procédé – en utilisant, pour 100 parties en moles du magnésium, de 1 à 50 parties en moles du dérivé d'acide phtalique – et le produit intermédiaire solide résultant est isolé par séparation de la phase liquide résiduaire, après quoi
(1.2) dans une deuxième étape, le produit intermédiaire solide obtenu dans l'étape (1.1) – qui se compose de magnésium pour A% en poids – est extrait au tétrachlorure de titane, de façon semi-continue ou continue, à une température dans la gamme de 100 à 150°C, jusqu'à ce que la matière solide résiduaire ait été enrichie en magnésium d'un facteur de 1,1 à 2,4 – c'est-à-dire qu'elle se compose de magnésium pour 1,1 • A à 2,4 • A% en poids – et enfin
(1.3) dans une troisième étape, la matière solide humidifiée avec le milieu d'extraction qui reste à la suite de l'étape (1.2) est lavée 1 à 10 fois avec un alcane en $C_5$ à $C_8$ liquide – en utilisant à chaque opération de lavage, pour 100 parties en poids de matière solide, 300 à 400 parties en volume d'alcane – et on obtient ainsi, avec la matière solide résultant de l'étape (1.3), le composant à base de titane (1).